# EUROPÄISCHE PATENTSCHRIFT

(11) **EP 1 140 597 B1**
(45) Veröffentlichungstag und Bekanntmachung des Hinweises auf die Patenterteilung: **16.03.2005**
(21) Anmeldenummer: 99967950.9
(22) Anmeldetag: 16.12.1999
(51) Int. Cl.: B60T 13/72

(54) **ELEKTRONISCH STEUERBARER BREMSKRAFTVERSTÄRKER**
ELECTRONICALLY CONTROLLABLE BRAKE BOOSTER
SERVOFREIN A COMMANDE ELECTRONIQUE

(30) Priorität: 18.12.1998 DE 19858649
(43) Veröffentlichungstag der Anmeldung: 10.10.2001
(73) Patentinhaber: LUCAS INDUSTRIES PUBLIC LIMITED COMPANY, Solihull B90 4LA (GB); DaimlerChrysler AG, 70567 Stuttgart (DE)
(72) Erfinder: LINDEN, Christoph, D-56179 Vallendar (DE); MAACK, Lorenz, D-70197 Stuttgart (DE)
(74) Vertreter: Schmidt, Steffen J., Dipl.-Ing.
(86) Internationale Anmeldenummer: PCT/EP1999/010013
(87) Internationale Veröffentlichungsnummer: WO 2000/037295

(56) Entgegenhaltungen:
- WO-A-96/30239
- WO-A-97/48585
- DE-A- 2 209 091
- DE-C- 19 744 054
- DE-C- 19 744 111

## Beschreibung

### 1.1. Hintergrund der Erfindung

Die vorliegende Erfindung betrifft einen elektronisch steuerbaren Bremskraftverstärker. Insbesondere betrifft die Erfindung einen elektronisch steuerbaren Bremskraftverstärker mit einer Unterdruckkammer und einer Druckkammer, die durch eine bewegliche Wand voneinander getrennt sind. Eine Steuerventilanordnung ist mittels einer elektromagnetischen Betätigungseinrichtung betätigbar. Durch die Steuerventilanordnung ist eine Druckdifferenz zwischen der Druck- und der Unterdruckkammer einstellbar. Die Steuerventilanordnung nimmt in Abhängigkeit von einem durch eine elektronische Steuerungseinheit als Stellgröße erzeugten und durch die elektromagnetische Betätigungseinrichtung fließenden Strom eine Haltestellung, eine Druck-Aufbau-Stellung, oder eine Druck-Abbau-Stellung ein. Mit dem Bremskraftverstärker ist eine Zylinder-Kolbenanordnung verbunden, die einen mit einem Bremspedal gekoppelten Kolben eines Hydraulikzylinders aufweist, der einen zu einer Radbremse führenden Hydraulikanschluß hat. Eine Sensoranordnung dient zur Erfassung eines mit dem Druck des Hydraulikzylinders korrelierten Signals, das die Regelgröße wiedergibt. Ein derartiger Bremskraftverstärker ist zum Beispiel in der DE 19527 493 A1 zusammen mit einem Lernverfahren für die Arbeitspunkteinstellung beschrieben.

Die DE 2 209 091 offenbart eine Vorrichtung zum Regeln des Betriebs eines Bremskraftverstärkers gemäβ dem Oberbegriff der Anspruchs 1.

### 1.2. Der Erfindung zugrundeliegendes Problem

Der vorstehend erläuterte Bremskraftverstärker wird in einem geschlossenen Regelkreis betrieben. Dies stellt sicher, daß ein Über- oder Unterschwingen der elektromagnetischen Betätigungseinrichtung weitgehend vermieden wird. Bedingt durch Störeinflüsse, die beispielsweise durch Reibungsverluste bei Bewegung des Ankers und der mit ihm gekoppelten Ventilkomponenten oder durch Toleranzen der Federanordnung oder durch Schwankungen externer Reaktionskräfte, wozu insbesondere im Fall eines Bremskraftverstärkers Schwankungen des Druckkraftanteils in der Unterdruckkammer zählen, hervorgerufen werden, ist die Steuerkennlinie im Bereich der beiden geneigten Zweige mit einem Streuband behaftet. Dies erweist sich vor allem bei der genauen Einstellung der "Haltestellung" als problematisch. Wird zum Beispiel eine Umschaltung von "Aufbaustellung" nach "Haltestellung" erwünscht, so kann es vorkommen, daß unmittelbar nach "Abbaustellung" umgeschaltet wird, wodurch ein abrupter Druckabfall eintritt, der insbesondere bei sicherheitskritischen Anwendungen, wie bei einem elektronisch gesteuerten Bremskraftverstärker, schwerwiegende Auswirkungen zur Folge haben kann. Um diesem Problem entgegenzuwirken wird nach der Lehre dieses Standes der Technik bei Umschaltung in "Haltestellung" immer ein Strom I0 eingestellt, der sich als arithmetischer Mittelwert aus den Strömen I1 und I2 ergibt, da die Anordnung so bemessen ist, daß sich die untere Grenze des Streubandes des linken geneigten Zweiges und die obere Grenze des Streubandes des rechten geneigten Zweiges nicht überdecken.

Die vorliegende Erfindung greift den Lösungsansatz aus der DE 195 27 493 A1 auf und bezieht den Fahrerbremswunsch in dieses Konzept direkt mit ein. Für diesen Zweck ist jedoch die in diesem Stand der Technik beschriebene Betrachtung des Drucks nicht zielführend.

### 1.3. Erfindungsgemäße Lösung

Zur Lösung dieses Problems wird bei einem Bremskraftverstärker der eingangs beschriebenen Art durch die elektronische Steuerungseinheit unter Berücksichtigung des Ausgangssignals einer den Fahrerbremswunsch erfassenden Sensoranordnung eine Führungsgröße ermittelt, wobei der Wert der Stellgröße gegenüber einem unmittelbar vorher ausgegebenenen Wert unverändert bleibt, falls die aus der Führungsgröße und der Regelgröße ermittelte Regeldifferenz von einem ersten vorbestimmten To-leranzbreitenwert nicht abweicht.

Diese Maßnahme führt zu einer "Beruhigung" der Betätigung des Stellgliedes, ohne daß die Qualität der Regelung leidet. Außerdem bleibt der Wert der Stellgröße gegenüber einem unmittelbar vorher ausgegebenenen Wert unverändert, falls auch eine (die erste oder zweite) Ab-leitung der Regeldifferenz von einem zweiten vorbestimmten Toleranzbreitenwert nicht abweicht. Durch die Einbeziehung der Gradienten der Regelabweichung erfolgt auch eine Anpas-sung des Regelverhaltens an das dynamische Verhalten der Gesamtanordung.

### 1.4. Vorteilhafte Weiterbildungen

Anstelle der Ableitung der Regeldifferenz heranzuziehen, kann der Wert der Stellgröße gegenüber einem unmittelbar vorher ausgegebenenen Wert unverändert bleiben, falls auch eine aus einer Ableitung der Führungsgröße und einer Ableitung der Regelgröße ermittelte Zwischengröße von einem zweiten vorbestimmten Toleranzbreitenwert nicht abweicht.

In einer bevorzugten Ausführungsform der Erfindung ist die Steuerventilanordnung durch einen ersten Stromwert der Stellgröße in die Druck-Aufbau-Stellung bringbar, in der die Verbindung der Unterdruckkammer mit der Druckkammer gesperrt und die Verbindung der Druckkammer zur Atmosphäre geöffnet ist, so daß an der beweglichen Wand eine Druckdifferenz aufgebaut bzw. erhöht wird, einen zweiten Stromwert der Stellgröße in die Druck-Halte-Stellung bringbar, in der Verbindung der Unterdruckkammer mit der Druckkkammer gesperrt und die Verbindung der Druckkammer zur Atmosphäre gesperrt ist, so daß eine an der beweglichen Wand wirkende Druckdifferenz aufrechterhalten wird, oder einen dritten Stromwert der Stellgröße in die Druck-Abbau-Stellung bringbar, in der die Verbindung der Unterdruckkammer mit der Druckkammer geöffnet und die Verbindung der Druckkammer zur Atmosphäre gesperrt ist, so daß über einen Druckausgleichsvorgang eine an der beweglichen Wand wirkende Druckdifferenz abgebaut wird.

Erfindungsgemäß nimmt die Stellgröße den ersten Stromwert an, wenn die Führungsgröße größer ist als die Regelgröße, den zweiten Stromwert, wenn die Führungsgröße im wesentlichen gleich der Regelgröße ist, und den dritten Stromwert, wenn die Führungsgröße kleiner ist als die Regelgröße.

In einer bevorzugten Ausführungsform der Erfindung dient ein zusätzlicher Proportional- und/oder Integral- und/ oder Differentialregler zur Umsetzung der Regeldifferenz in eine Hilfsstellgröße um diese der Stellgröße vorzugsweise additiv zu überlagern.

In einer Weiterbildung kann dem zusätzlichen Proportionalund/oder Integral- und/ oder Differentialregler ein lineares Übertragungsglied mit Toter Zone vorgeschaltet sein.

### 1.5 Kurze Beschreibung der Zeichnungen

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnungen erläutert. Dazu zeigen
- Fig. 1: schematisch eine Fahrzeugbremsanlage mit einem elektronisch steuerbaren Bremskraftverstärker,
- Fig. 2: schematisch ein Diagramm zur Erläuterung der Steuerkennlinie eines elektronisch steuerbaren Bremskraftverstärkers,
- Fig. 3: schematisch einen Regelkreis zum erfindungsgemäßen Betreiben eines elektronisch steuerbaren Bremskraftverstärkers,
- Fig. 4: schematisch ein Flußdiagramm zur Erläuterung des erfindungsgemäßen Betriebs eines elektronischen steuerbaren Bremskraftverstärkers, und
- Fig. 5: schematisch zwei Zeitdiagramme zur Erläuterung des erfindungsgemäßen Betriebs eines elektronisch steuerbaren Bremskraftverstärkers.

### 1.6. Detaillierte Beschreibung der Ausführungsformen

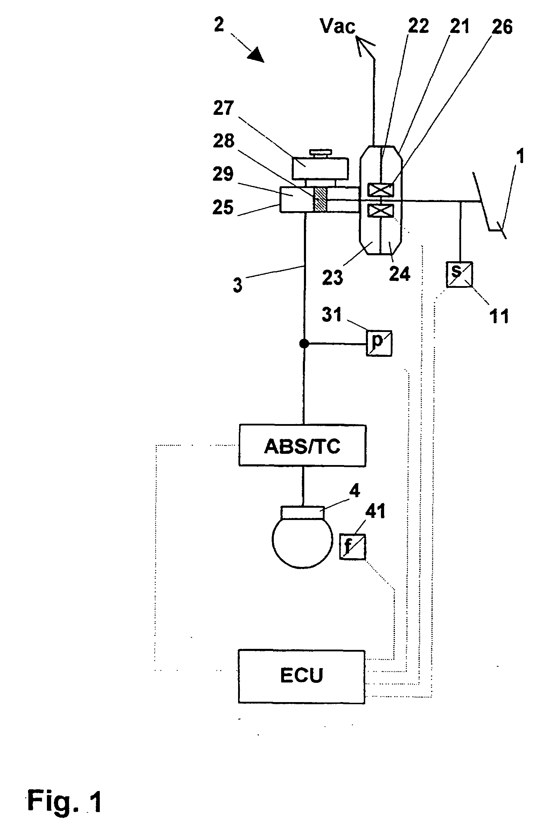

Bei der in Fig. 1 schematisch dargestellten Fahrzeugbremsanlage dient ein Bremspedal 1 dazu, über ein Betätigungselement eine Bremsdruckgebereinheit 2 zu betätigen. Die Bremsdruckgebereinheit 2 weist einen Bremszylinder 25 auf, in dem ein Kolben 28 eine Druckkammer 29 begrenzt. Die Druckkammer 29 wird von einem Reservoir 27 mit Bremsfluid versorgt. Von der Druckkammer 29 führt eine Bremsleitung 3 zu einer Radbremse 4 des Fahrzeugs.

In der Bremsleitung 3 ist eine Antiblockier- und/oder Antriebsschlupfregeleinrichtung ABS/TC zwischen der Bremsdruckgebereinheit 2 und der Radbremse 4 angeordnet. Die Antiblockier- und/oder Antriebsschlupfregeleinrichtung ABS/TC umfaßt in bekannter Weise unter anderem Ventil- und Pumpenanordnungen, die von einer elektronischen steuereinheit ECU angesteuert werden, um den Druck in der Radbremse 4 zu modulieren. Dies geschieht in Abhängigkeit des Drehverhaltens eines der Radbremse 4 zugeordneten Fahrzeugrades, das mittels eines Sensors 41 erfaßt und der elektronischen Steuereinheit ECU zugeführt wird.

Die Bremsdruckgebereinheit 2 weist zur Verstärkung der vom Fahrer über das Bremspedal 1 eingeleiteten Betätigungskraft einen Bremskraftverstärker 21 auf. Eine bewegliche Wand 22 unterteilt den Bremskraftverstärker 21 in eine Unterdruckkammer 23 und eine Druckkammer 24. Zur Erzeugung des Unterdrucks ist die Unterdruckkammer an eine nicht näher dargestellte Unterdruckquelle Vac angeschlossen. Bei einem mit einem ottomotor ausgerüsteten Fahrzeug steht hierfür das im Ansaugrohr prinzipbedingt erzeugte Vakuum zur Verfügung.

Dagegen ist bei einem mit einem Diesel- oder Elektromotor angetriebenen Fahrzeug eine zusätzliche Vakuumpumpe als Unterdruckquelle Vac notwendig. Bei einer Betätigung des Bremspedals 1 funktioniert der Bremskraftverstärker in bekannter Weise dadurch, daß die Druckkammer 24 mit Atmosphärendruck beaufschlagt wird, so daß an der beweglichen Wand 22 eine Druckdifferenz wirkt, die die am Bremspedal 1 eingeleitete Betätigungskraft unterstützt. Im unbetätigten Zustand sind die Unterdruckkammer 23 und die Druckkammer 24 miteinander verbunden und somit druckausgeglichen, so daß an der beweglichen Wand 22 keine Druckdifferenz wirksam ist.

Der Bremskraftverstärker 21 ist über eine Elektromagnetanordnung 26 auch elektronisch steuerbar. Die elektronische Steuerbarkeit des Bremskraftverstärkers 21 ermöglicht es Bremsvorgänge auch automatisch, also unabhängig von einer Betätigung des Bremspedals 1 auszuführen. Dies kann zur Ausführung beispielsweise einer Antriebsschlupfregelung, einer Fahrdynamikregelung oder einer Abstandsregelung dienen. Eine Sensoreinrichtung 11 ist vorgesehen, um mit der Betätigung des Bremspedals 1 in Beziehung stehende Größen, wie beispielsweise den Pedalweg, die Pedalkraft oder die Pedalbetätigungsgeschwindigkeit, für die Auswertung in der elektronischen Steuereinheit ECU zu erfassen, um auch Bremsungen in Notsituationen auszuführen, wobei zum Beispiel die Überschreitung einer bestimmten Pedalbetätigungsgeschwindigkeit als Kriterium dient. Aus dem/den Signal/en eines oder mehrerer Sensoren wird in der elektronischen Steuereinheit ECU ein Soll-Drucksignal pSOLL als Führungsgröße erzeugt.

Die Elektromagnetanordnung 26 betätigt ein hier nicht näher dargestelltes Steuerventil, um den Bremskraftverstärker 21 in unterschiedliche Steuerstellungen (I., II., III.) zu bringen:
- in eine erste sogenannte "Aufbaustellung" (I.), in der die Verbindung der Unterdruckkammer 23 mit der Druckkammer 24 gesperrt und die Verbindung der Druckkammer 24 zur Atmosphäre geöffnet ist, so daß an der beweglichen Wand 22 eine Druckdifferenz aufgebaut bzw. erhöht wird,
- oder in eine zweite sogenannte "Haltestellung" (II.), in der die Verbindung der Unterdruckkammer 23 mit der Druckkammer 24 gesperrt und die Verbindung der Druckkammer 24 zur Atmosphäre gesperrt ist, so daß eine an der beweglichen Wand 22 wirkende Druckdifferenz aufrechterhalten wird, oder
- in eine sogenannte "Abbaustellung" (III.), in der die Verbindung der Unterdruckkammer 23 mit der Druckkammer 24 geöffnet und die Verbindung der Druckkammer 24 zur Atmosphäre gesperrt ist, so daß über einen Druckausgleichsvorgang eine an der beweglichen Wand 22 wirkende Druckdifferenz abgebaut wird.

Um das Steuerventil zwecks Modulation der Druckdifferenz an der beweglichen Wand 22 in die unterschiedlichen Steuerstellungen (I., II., III.) zu bringen, bestromt die elektronische Steuereinheit ECU die Elektromagnetanordnung 26 mit einem die Stellgröße bildenden Steuerstrom ISOLL, wobei die Variation des Steuerstroms ISOLL beispielsweise durch Pulsweitenmodulation erfolgt. Dabei wird auf den Anker der Elektromagnetanordnung 26 eine Magnetkraft ausgeübt, die eine Positionierung des Ankers bewirkt, entsprechend der sich dann die Steuerstellungen (I., II., III.) ergeben.

Der in der Druckkammer 29 des Bremszylinders 25 erzeugte und in die Bremsleitung 3 eingeleitete Bremsdruck pIST stellt die Regelgröße dar und wird mittels eines Sensors 31 erfaßt und an die elektronische Steuereinheit ECU weitergeleitet, um den Bremsdruck pIST in Abhängigkeit von einem gewünschten Druckwert und/oder Druckverlauf pSOLL durch Verstellen des die Elektromagnetanordnung 26 bestromenden Steuerstromes ISOLL zu regeln.

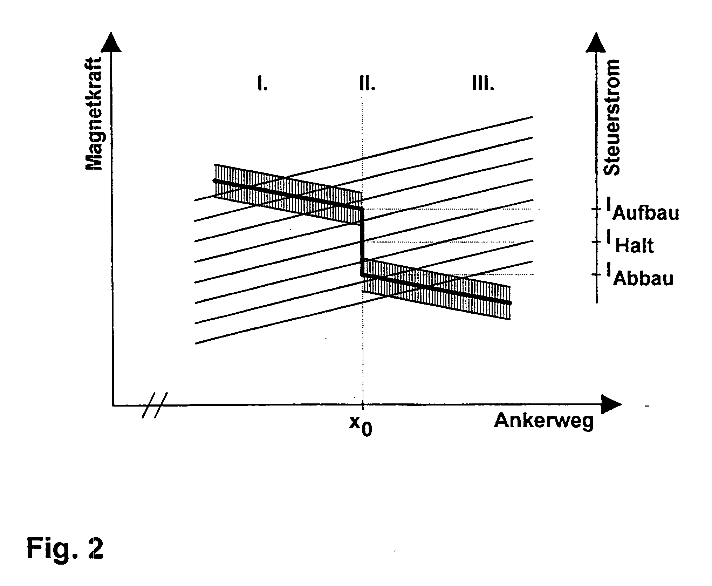

In dem Diagramm gemäss Fig. 2 ist auf der Abszisse der Weg und auf der Ordinate die auf den Anker der Elektromagnetanordnung 26 ausgeübte Magnetkraft aufgetragen, die sich in Abhängigkeit von dem Steuerstrom ISOLL ergibt. Hierbei handelt es sich um eine idealisierte schematische Darstellung, die sich auf einen Arbeitsbereich bezieht, der derart ausgelegt ist, daß ein proportionaler Zusammenhang zwischen Magnetkraft und Steuerstrom besteht. Weiterhin ist die Steuerkennlinie des elektronisch steuerbaren Bremskraftverstärkers 21 eingetragen. Diese Steuerkennlinie weist insgesamt drei Zweige auf. Bei dem senkrechten Zweig ist einer bestimmten Ankerposition x0 ein Strombereich IABBAU < ISOLL < IAUFBAU zugeordnet, wobei die Position x0 genau der Haltestellung (II.) entspricht. Der sich nach links an den senkrechten Zweig anschliessende geneigte Zweig gilt für einen Strom ISOLL > IAUFBAU und steht für die Aufbaustellung (I.), während der von dem senkrechten Zweig nach rechts abgehende geneigte Zweig für einen Strom ISOLL < IABBAU gilt und die Abbaustellung (III.) charakterisiert.

Bedingt durch Störeinflüsse, die beispielsweise durch Reibungsverluste, Toleranzen, Temperaturschwankungen oder Schwankungen externer Reaktionskräfte, wozu insbesondere Schwankungen des Druckkraftanteils in der Unterdruckkammer 23 des Bremskraftverstärkers 21 zählen, hervorgerufen werden, ist die Steuerkennlinie im Bereich der geneigten Zweige mit einem Streuband behaftet, was zu einer Verschiebung der Arbeitspunkte IABBAU und IAUFBAU führt. Um diesem Problem entgegenzuwirken, wird vorzugsweise für IHALT ein Strom eingestellt, der sich als arithmetischer Mittelwert der Ströme IABBAU und IAUFBAU ergibt. Dies und insbesondere ein Verfahren zum Lernen der die Arbeitspunkte bestimmenden Ströme IABBAU und IAUFBAU ist in der DE 195 27 493 A1 beschrieben.

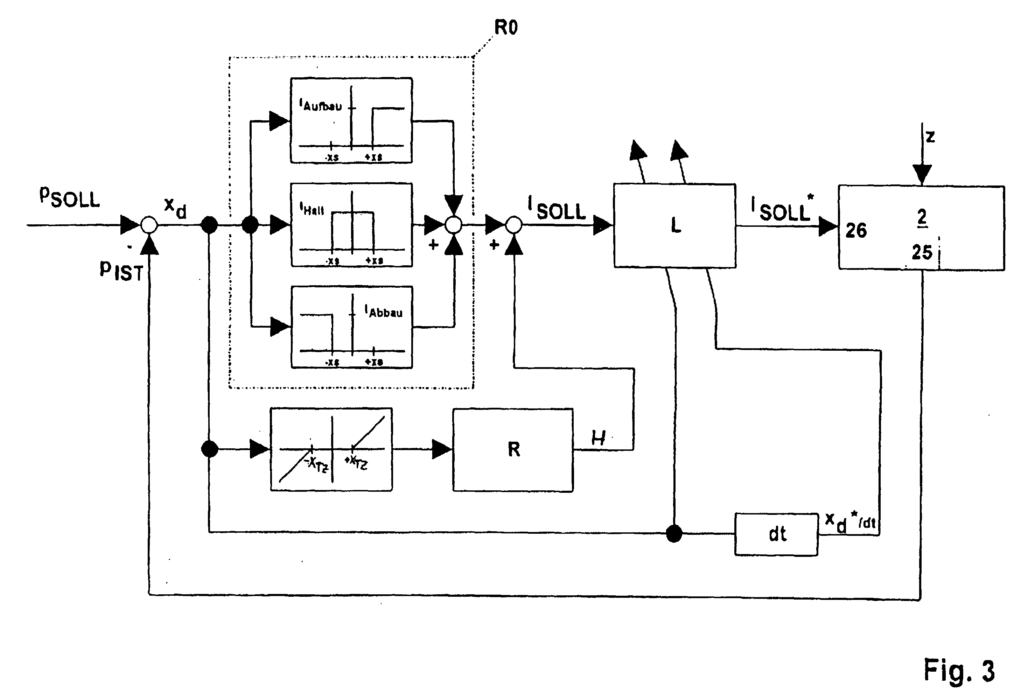

Der Betrieb des elektronisch steuerbaren Bremskraftverstärkers 21 in einem geschlossenen Regelkreis ist in Fig. 3 dargestellt. Dabei wird eine von der Regelstrecke, der Bremsdruckgebereinheit 2, ausgehende Regelgrösse, der im Bremszylinder 25 erzeugte Bremsdruck pIST, fortlaufend erfasst und mit einer Führungsgrösse, dem gewünschten Druckwert pSOLL, verglichen. Das Ergebnis dieses Vergleichs ist eine Regeldifferenz xd, die einer Regeleinrichtung zugeführt wird. Die Stellgrösse, die von der Regeleinrichtung ausgegeben wird, ist der die Elektromagnetanordnung 26 bestromende Steuerstrom ISOLL. Bei den Störgrößen z handelt es sich vorwiegend um die bereits erwähnten durch Reibung, Toleranzen, Temperatur und Reaktionskräfte verursachten Einflüsse.

Die Regeleinrichtung weist zum einen einen dreistufigen Regler R0 auf, der in Abhängigkeit von der Regeldifferenz xd zunächst eine "Grob- bzw. Voreinstellung" der Stellgröße ISOLL vornimmt, demzufolge gilt, daß dann
- ISOLL gleich IAUFBAU gesetzt wird, wenn pSOLL größer als pIST ist,
- ISOLL gleich IHALTE gesetzt wird, wenn pSOLL (im wesentlichen) gleich pIST ist,
- ISOLL gleich IABBAU gesetzt wird, wenn pSOLL kleiner als pIST ist.

Die Regeldifferenz xd wird jeweils mit einem Schwellwert xs gemäß den in Fig. 3 dargestellten Gewichtsfunktionen verglichen. Zum anderen umfaßt die Regeleinrichtung einen analog oder digital ausgeführten Regler R, der zum Beispiel ein Proportional- und/oder Integral- und/oder Differential-Regelverhalten hat. Der Regler R ist zu dem dreistufigen Regler R0 parallel geschaltet, um die "Feinregelung" der Stellgrösse ISOLL vorzunehmen. Dem vorzugsweise als PI-Regler ausgestalteten Regler R ist ein lineares Übertragungsglied mit Toter Zone TZ vorgeschaltet.Die Tote Zone TZ ist so bemessen, daß eine den Haltestrom nicht überschreitende Regeldifferenz ausgeblendet wird, während eine dem Aufbau- oder Abbaustrom entprechende Regeldifferenz unverändert dem Regler R zugeführt wird.

Erfindungsgemäß ist zwischen die Regeleinrichtung R0, R und der Regelstrecke 2 ein Postprozessor L geschaltet. Der Postprozessor L nimmt eine Anpassung der Stellgrösse ISOLL an das dynamische Verhalten der Führungsgröße pSOLL und der Regelgröße pIST vor. Dazu wird der Gradient der Regeldifferenz (fortlaufend) ermittelt, um deren Abweichung xd* (fortlaufend) zu bestimmen und in dem Postprozessor L zu verarbeiten. Die Stellgröße ISOLL, die an der Eingangsseite des Postprozessors L ansteht, wird dann in Abhängigkeit von der Abweichung xd* und/oder der Regelabweichung xd nachgestellt, so daß an der Ausgangseite des Postprozessors L eine an das dynamische Verhalten angepaßte Stellgröße ISOLL* ausgegeben wird.

Vorzugsweise sind die Regeleinrichtung R0, R sowie der Postprozessor L als Bestandteil der elektronischen Steuereinheit ECU ausgeführt. Da die elektronische Steuereinheit ECU üblicherweise mit wenigstens einem Mikrocomputer ausgestattet ist, können die Regeleinrichtung R0, R sowie der Postprozessor L einfacherweise programmtechnisch - also ohne schaltungstechnischen Aufwand - realisiert werden.

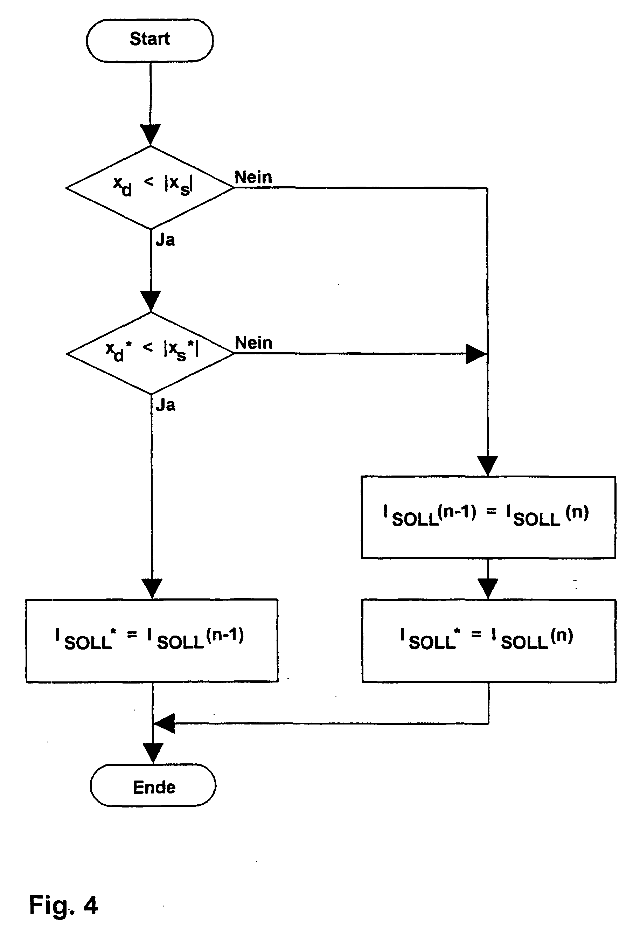

In Fig. 4 ist eine mögliche Realisierung des Postprozessors L als Flußdiagramm dargestellt. Der in dem Flußdiagramm dargestellte Ablauf wird zyklisch wie folgt abgearbeitet:
- Übergeordnet wird abgefragt, ob die Regelabweichung xd kleiner ist als der Schwellwert xs.
- Dann wird abgefragt, ob die Abweichung xd* der Gradienten pSOLL/dt, pIST/dt innerhalb eines Schwellbandes |xs*| liegt.
- Wenn eine der Abfragen "Nein" ergibt, also die Abweichung xd* außerhalb des Schwellbandes |xs*| liegt oder die Regelabweichung xd größer als der Toleranzbreitenwert xs ist, dann wird die von der Regeleinrichtung R0, R im aktuellen Zyklus ausgegebene Stellgrösse ISOLL(n) für den nächsten Regelzyklus als ISOLL(n-1) abgespeichert, und es wird die im aktuellen Zyklus ausgegebene Stellgrösse ISOLL(n) als neue Stellgröße ISOLL* unverändert übernommen und ausgegeben.
- Wenn beide Abfragen "Ja" ergeben, also die Abweichung xd* innerhalb der Toleranzbreite |xs*| liegt und die Regelabweichung xd kleiner als der Toleranzbreitenwertes xs ist, dann wird die im vorangegangenen Zyklus abgespeicherte Stellgröße ISOLL(n-1) als neue Stellgröße ISOLL* ausgegeben.

Mit dieser Realisierung des Postprozessors L wird bewirkt, daß während Zeitabschnitten, in denen die Abweichung xd* der Gradienten pSOLL/dt, pIST/dt innerhalb der Toleranzbreite |xs*| liegt, die Stellgröße ISOLL konstant gehalten wird. Dabei wird die Stellgröße auf dem Wert gehalten, der zuletzt im Abfragepfad "Nein", unter ISOLL(n-1) abgespeichert worden ist. Demgegenüber bleibt während Zeitabschnitten, in denen die Abweichung xd* der Gradienten pSOLL/dt, pIST/dt außerhalb der Toleranzwerte |xs*| liegt, die aktuell von der Regeleinrichtung R0, R ausgegebene Stellgröße ISOLL(n) unbeeinflußt und wird als ISOLL* ausgegeben.

Weil die Stellgröße während der Regelung über längere Zeitabschnitte konstant gehalten wird, erfolgt auch weniger häufig eine Verstellung des Stellglieds, das die Elektromagnetanordnung 26 und das nicht näher dargestellte Steuerventil umfaßt. Aufgrund der erheblich weniger verrichteten Verstellarbeit besteht der große Vorteil, daß die Regelung insgesamt betrachtet besonders komfortabel hinsichtlich Geräuschentwicklung abläuft, denn das Steuerventil verharrt während der Konstantphasen der Stellgröße in einer bestimmten Steuer- oder Öffnungsstellung. Bezogen auf die Fahrzeugbremsanlage ergibt sich dadurch ein besonders harmonischer oder geräuscharmer Bremsdruckverlauf.

Es versteht sich, daß beim Abspeichern der Stellgröße unter ISOLL(n-1) auch eine Mittelwertbildung über mehrere zurückliegende Werte durchgeführt werden kann, so daß einzelne "Ausreißer", die die Regelgüte nachteilig beeinflussen könnten, kompensiert werden. Auch versteht es sich, daß die Breite des Toleranzbreitenwertes |xs*| und/oder der Toleranzbreitenwert |xs|, mit dem die Regelabweichung xd verglichen wird, adaptiv vor oder während des Regelvorgangs gesteuert werden kann, um das Ansprechverhalten des Postprozessors L an unterschiedliche Arbeitspunkte des elektronisch steuerbaren Bremskraftverstärkers anzupassen.

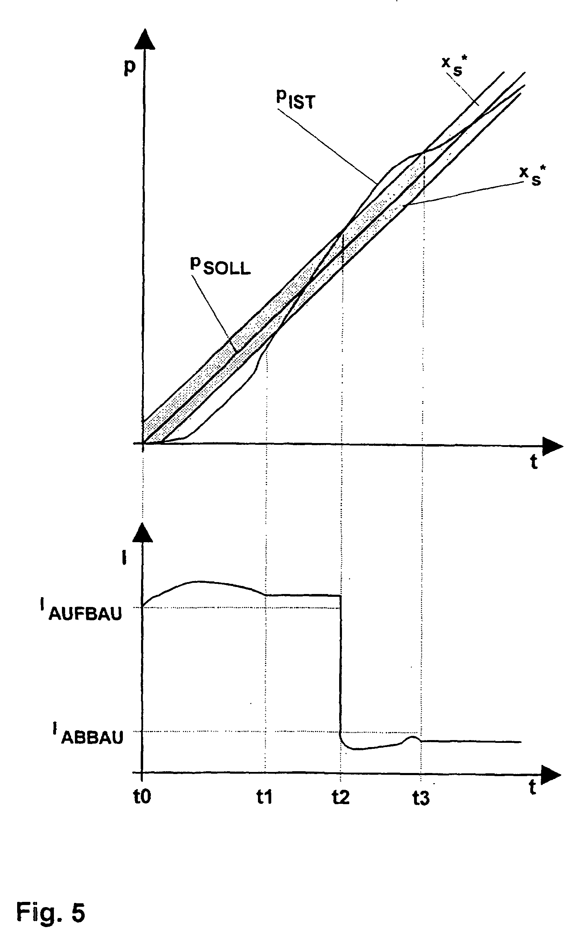

In Fig. 5 wird das erfindungsgemäße Betreiben anhand von zwei Zeitdiagrammen erläutert. In dem oberen Zeitdiagramm ist der zeitliche Verlauf der Führungsgröße pSOLL und der Regelgröße pIST, in dem unteren Zeitdiagramm der zeitliche Verlauf der Stellgrösse ISOLL dargestellt. Die Führungsgröße pSOLL wird im Zeitpunkt t0 beginnend rampenförmig erhöht. Dazu nimmt im Zeitpunkt t0 die Stellgrösse ISOLL sprungförmig den Aufbaustrom IAUFBAU an, um die Regelgröße pIST zu regeln.

Im Zeitabschnitt 0-t1 verläuft die Regelgröße pIST unterhalb der Führungsgröße pSOLL. Ab dem Zeitpunkt t1 liegt die Abweichung xd* der Gradienten pSOLL/dt, pIST/dt innerhalb des Toleranzwertes |xs*|, weshalb die Stellgröße ISOLL im Zeitabschnitt t1-t2 konstant gehalten wird. Im Zeitpunkt t2 gerät die Abweichung xd* der Gradienten pSOLL/dt, pIST/dt bzw. xd/dt außerhalb des Toleranzwertes |xs*|, so daß die Regelung wieder einsetzt, und zwar in der Weise, daß die Stellgrösse ISOLL sprungförmig den Abbaustrom IABBAU annimmt, um die Regelgröße pIST zu regeln. Im Zeitabschnitt t2-t3 verläuft die Regelgröße pIST oberhalb der Führungsgröße pSOLL, bis im Zeitpunkt t3 die Abweichung xd* der Gradienten pSOLL/dt, pIST/dt bzw. xd/dt wieder innerhalb des Toleranzwertes |xs*| liegt, so daß die Stellgröße ISOLL ab dem Zeitpunkt t3 wieder konstant gehalten wird. Während der Zeitabschnitte t0-t1 und t2-t3 wird die Stellgröße ISOLL nicht konstant gehalten, obwohl teilweise die Abweichung xd* der Gradienten der Regeldifferenz nahezu Null ist. Dies liegt daran, daß während der Zeitabschnitte t0-t1 und t2-t3 die Regelabweichung xd größer ist als ihr Toleranzwert xs, wie schon anhand Fig. 4 erläutert wurde.

## Patentansprüche

1. Elektronisch steuerbarer Bremskraftverstärker mit
- einer Unterdruckkammer (23) und einer Druckkammer (24), die durch eine bewegliche Wand (22) voneinander getrennt sind,
- einer Steuerventilanordnung, die mittels einer elektromagnetischen Betätigungseinrichtung (26) betätigbar ist, und durch die eine Druckdifferenz zwischen der Druck- und der Unterdruckkammer (23; 24) einstellbar ist, wobei
- die Steuerventilanordnung in Abhängigkeit von einem durch eine elektronische Steuerungseinheit (ECU) als Stellgröße erzeugten und durch die elektromagnetische Betätigungseinrichtung (26) fließenden Strom (I_{SOLL}) eine Haltestellung, eine Druck-Aufbau-Stellung, oder eine Druck-Abbau-Stellung einnimmt,
- einer mit dem Bremskraftverstärker verbundenen Zylinder-Kolbenanordnung, die einen mit einem Bremspedal (1) gekoppelten Kolben eines Hydraulikzylinders aufweist, der einen zu einer Radbremse (4) führenden Hydraulikanschluß hat,
- einer Sensoranordnung (31) zur Erfassung eines mit dem Druck des Hydraulikzylinders (25) korrelierten Signals, das die Regelgröße (p_{IST}) wiedergibt, wobei
- die elektronische Steuerungseinheit (ECU) unter Berücksichtigung des Ausgangssignals einer den Fahrerbremswunsch erfassenden Sensoranordnung (11) eine Führungsgröße (p_{SOLL}) ermittelt, **dadurch gekennzeichnet, daß**
- der Wert der Stellgröße (I_{SOLL}(n)) gegenüber einem unmittelbar vorher ausgegebenenen Wert der Stellgröße (I_{SOLL}(n-1)) unverändert bleibt, falls die aus der Führungsgröße (P_{SOLL}) und der Regelgröße (p_{IST}) ermittelte Regeldifferenz (x_{d}) von einem ersten vorbestimmten Toleranzbreitenwert (xₛ) nicht abweicht, und falls auch eine Ableitung der Regeldifferenz (x_{d}/dt) von einem zweiten vorbestimmten Toleranzbreitenwert (xₛ*) nicht abweicht.

2. Elektronisch steuerbarer Bremskraftverstärker nach Anspruch 1, **dadurch gekennzeichnet, daß**
- der Wert der Stellgröße (I_{SOLL}(n)) gegenüber einem unmittelbar vorher ausgegebenenen Wert der Stellgröße (I_{SOLL}(n-1)) unverändert bleibt, falls auch eine.aus einer Ableitung der Führungsgröße (p_{SOLL}/dt) und einer Ableitung der Regelgröße (p_{IST}/dt) ermittelte Zwischengröße (x_{d}*/dt) von einem zweiten vorbestimmten Toleranzbreitenwert (x_{d}/dt) nicht abweicht.

3. Elektronisch steuerbarer Bremskraftverstärker nach einem der vorhergehenden Ansprüche, **dadurch gekennzeichnet, daß**
- die Steuerventilanordnung durch
-- einen ersten Stromwert (I_{AUFBAU}) der Stellgröße (I_{SOLL}) in die Druck-Aufbau-Stellung (I.) bringbar ist, in der die Verbindung der Unterdruckkammer (23) mit der Druckkammer (24) gesperrt und die Verbindung der Druckkammer (24) zur Atmosphäre geöffnet ist, so daß an der beweglichen Wand 22 eine Druckdifferenz aufgebaut bzw. erhöht wird,
-- einen zweiten Stromwert (I_{HALTE}) der Stellgröße (I_{SOLL}) in die Druck-Halte-Stellung (II.), in der Verbindung der Unterdruckkammer (23) mit der Druckkkammer (24) gesperrt und die Verbindung der Druckkammer (24) zur Atmosphäre gesperrt ist, so daß eine an der beweglichen Wand (22) wirkende Druckdifferenz aufrechterhalten wird, oder
-- einen dritten Stromwert (I_{ABBAU}) der Stellgröße (I_{SOLL}) in die Druck-Abbau-Stellung (III.) bringbar ist, in der die Verbindung der Unterdruckkammer (23) mit der Druckkammer (24) geöffnet und die Verbindung der Druckkammer (24) zur Atmosphäre gesperrt ist, so daß über einen Druckausgleichsvorgang eine an der beweglichen Wand (22) wirkende Druckdifferenz abgebaut wird.

4. Elektronisch steuerbarer Bremskraftverstärker nach Anspruch 3, **dadurch gekennzeichnet, daß**
- die Stellgröße (I_{SOLL}) den ersten Stromwert (I_{AUFBAU}) annimmt, wenn die Führungsgröße (p_{SOLL}) größer ist als die Regelgröße (p_{IST}),
- die Stellgröße (I_{SOLL}) den zweiten Stromwert (I_{HALTE}) annimmt, wenn die Führungsgröße (p_{SOLL}) im wesentlichen gleich der Regelgröße (p_{IST}) ist, und
- die Stellgröße (I_{SOLL}) den dritten Stromwert (I_{ABBAU}) annimmt, wenn die Führungsgröße (p_{SOLL}) kleiner ist als die Regelgröße (p_{IST}).

5. Elektronisch steuerbarer Bremskraftverstärker nach Anspruch 4, **gekennzeichnet**
- einen zusätzlicher Proportional- und/oder Integral- und/oder Differentialregler (R) zur Umsetzung der Regeldifferenz (x_{d}) in eine Hilfsstellgröße (H) um diese der Stellgröße (I_{SOLL}) additiv zu überlagern.

6. Elektronisch steuerbarer Bremskraftverstärker nach Anspruch 5, **dadurch gekennzeichnet, daß**
- dem zusätzlichen Proportional- und/oder Integral- und/ oder Differentialregler (R) ein lineares Übertragungsglied mit Toter Zone (|X_{TZ}|) vorgeschaltet ist.

## Claims

1. Electronically controllable brake booster, comprising
- a vacuum chamber (23) and a pressure chamber (24) that are separated from one another by a movable wall (22);
- a control valve arrangement which is adapted to be actuated by means of an electromagnetic actuating device (26) and via which a pressure difference between the pressure and the vacuum chamber (23; 24) can be set, wherein
- the control valve arrangement takes up a holding position, a pressure build-up position or a pressure reduction position in response to a current (I_{SOLL}) generated as correcting variable by an electronic control unit (ECU) and flowing through the electromagnetic actuating device (26);
- a cylinder-piston arrangement which is connected to the brake booster and comprises a piston, coupled to a brake pedal (1), of a hydraulic cylinder which has a hydraulic connection leading to a wheel brake (4);
- a sensor arrangement (31) for detecting a signal which is correlated with the pressure of the hydraulic cylinder (25) and which reproduces the controlled variable (P_{IST}), wherein
- the electronic control unit (ECU) establishes a command variable (P_{SOLL}), taking account of the output signal of a sensor arrangement (11) detecting the driver's braking requirement, **characterized in that**
- the value of the correcting variable (I_{SOLL}(n)) remains unchanged with respect to a value of the correcting variable (I_{SOLL}(n-1)) output directly beforehand, if the control difference (x_{d}) established from the command variable (P_{SOLL}) and the controlled variable (P_{IST}) does not deviate from a first predetermined tolerance range value (xₛ), and if a derivative of the control difference (x_{d}/dt) also does not deviate from a second predetermined tolerance range value(xₛ*).

2. Electronically controllable brake booster according to claim 1, **characterized in that**
- the value of the correcting variable (I_{SOLL}(n)) remains unchanged with respect to a value of the correcting variable (I_{SOLL}(n-1)) output directly beforehand if an intermediate variable (x_{d}*/dt) established from a derivative of the command variable (P_{SOLL}/dt) and a derivative of the controlled variable (P_{IST}/dt) also does not deviate from a second predetermined tolerance range value (x_{d/}dt).

3. Electronically controllable brake booster according to one of the preceding claims, **characterized in that**
- the control valve arrangement can be brought by
-- a first current value (I_{AUFBAU}) of the correcting variable (I_{SOLL}) into the pressure build-up position (I.) in which the connection between the vacuum chamber (23) and the pressure chamber (24) is blocked and the connection between the pressure chamber (24) and the atmosphere is open, so that a pressure difference is built up or increased at the movable wall (22);
-- a second current value (I_{HALTE}) of the correcting variable (I_{SOLL}) into the pressure holding position (II.) in which the connection between the vacuum chamber (23) and the pressure chamber (24) is blocked and the connection between the pressure chamber (24) with the atmosphere is blocked, so that a pressure difference acting at the movable wall (22) is maintained, or
-- a third current value (I_{ABBAU}) of the correcting variable (I_{SOLL}) into the pressure reduction position (III.) in which the connection between the vacuum chamber (23) and the pressure chamber (24) is open and the connection between the pressure chamber (24) and the atmosphere is blocked, so that a pressure difference a(I_{SOLL}) acting at the movable wall (22) is reduced via a pressure equalization procedure.

4. Electronically controllable brake booster according to claim 3, **characterized in that**
- the correcting variable (I_{SOLL}) assumes the first current value (I_{AUFBAU}) if the command variable (P_{SOLL}) is greater than the controlled variable (P_{IST});
- the correcting variable (I_{SOLL}) assumes the second current value (I_{HALTE}) if the command variable (P_{SOLL}) is substantially equal to the controlled variable (P_{IST}), and
- the correcting variable (I_{SOLL}) assumes the third current value (I_{ABBAU}) if the command variable (P_{SOLL}) is less than the controlled variable (P_{IST}).

5. Electronically controllable brake booster according to claim 4, **characterized by**
- an additional proportional and/or integral and/or differential controller (R) for converting the control difference (x_{d}) into an auxiliary correcting variable (H) so as to superimpose the latter on the correcting variable (I_{SOLL}) in additive fashion.

6. Electronically controllable brake booster according to claim 5, **characterized in that**
- a linear transmission member with dead zone (|X_{TZ}|) is connected upstream of the additional proportional and/or integral and/or differential controller (R).

## Revendications

1. Servofrein à commande électronique comprenant
- une chambre de dépression (23) et une chambre de pression (24) séparées l'une de l'autre par une paroi mobile (22),
- un ensemble de soupapes de commande qui peut être actionné par un dispositif d'actionnement électromagnétique (26) et permet de réguler une différence de pression entre la chambre de dépression et la chambre de pression (23 ; 24), ledit ensemble de soupapes de commande prenant, en fonction d'un courant (I_{SOLL}) *[I*_{*THÉORIQUE*}] généré comme grandeur de commande par une unité de commande électronique (ECU) et passant par le dispositif d'actionnement électromagnétique (26), une position de maintien, une position de mise en pression ou une position de réduction de pression,
- un ensemble cylindre-piston qui est relié à l'amplificateur de force de freinage et présente un piston de cylindre hydraulique couplé à une pédale de frein (1), lequel cylindre dispose d'un raccord hydraulique menant vers un frein de roue (4),
- une unité de détection (31) pour la saisie d'un signal corrélé à la pression du cylindre hydraulique (25), lequel signal reproduit la grandeur de réglage (p_{IST}) *[p*_{*RÉELLE*}], l'unité de commande électronique (ECU) déterminant, en fonction du signal de sortie émis par une unité de détection (11) d'actionnement de la pédale de frein, une grandeur de référence (p_{SOLL}) *[p*_{*THÉORIQUE*}*]*, **caractérisé en ce que**
- la valeur de la grandeur de commande (I_{SOLL}(n)) *[I*_{*THÉORIQUE*}*(n)]* reste inchangée par rapport à une valeur de la grandeur de commande (I_{SOLL}(n-1)) *[I*_{*THÉORIQUE*}*(n-1)]* émise immédiatement auparavant si la différence de réglage (x_{d}) déterminée à partir de la grandeur de référence (p_{SOLL}) *[P*_{*THÉORIQUE]*} et de la grandeur de réglage (p_{IST}) *[p*_{*RÉELLE*}*]* ne dévie pas d'une première valeur (xₛ) prédéterminée comprise dans une plage de tolérance prédéfinie et si une dérivée de la différence de réglage (x_{d}/dt) ne dévie pas d'une deuxième valeur (xₛ*) prédéterminée comprise dans une plage de tolérance prédéfinie.

2. Servofrein à commande électronique selon la revendication 1, **caractérisé en ce que**
- la valeur de la grandeur de commande (I_{SOLL}(n)) *[I*_{*THÉORIQUE*}*(n)]* reste inchangée par rapport à une valeur de la grandeur de commande (I_{SOLL}(n-1)) *[I*_{*THÉORIQUE*}*(n-1)]* émise immédiatement auparavant si une grandeur intermédiaire (x_{d}*/dt) déterminée à partir d'une dérivée de la grandeur de référence (p_{SOLL}/dt) *[p*_{*THÉORIQUE*}/*dt]* et d'une dérivée de la grandeur de réglage (p_{IST}/dt) *[p*_{*RÉELLE*}/*dt]* ne dévie pas d'une deuxième valeur prédéterminée (x_{d}/dt) comprise dans une plage de tolérance prédéfinie.

3. Servofrein à commande électronique selon l'une des revendications précédentes, **caractérisé en ce que**
- l'ensemble de soupapes de commande peut
- au moyen d'une première valeur de courant (I_{AUFBAU}) *[I*_{*MISE EN PRESSION]*} de la grandeur de commande (I_{SOLL}) *[I*_{*THÉORIQUE*}*]*, être amené en position de mise en pression (I.) dans laquelle la liaison entre la chambre de dépression (23) et la chambre de pression (24) est bloquée et la liaison de la chambre de pression (24) vers l'atmosphère est ouverte de sorte qu'une différence de pression est engendrée ou s'accroît à la paroi mobile (22),
- au moyen d'une deuxième valeur de courant (I_{HALT}) *[I*_{*MAINTIEN*}*]* de la grandeur de commande (I_{SOLL}) *[I*_{*THÉORIQUE*}*]*, être amené en position de maintien de pression (II.) dans laquelle la liaison entre la chambre de dépression (23) et la chambre de pression (24) est bloquée et la liaison de la chambre de pression (24) vers l'atmosphère est bloquée de sorte que la différence de pression agissant à la paroi mobile (22) est maintenue, ou peut
- au moyen d'une troisième valeur de courant (I_{ABBAU}) *[I*_{*RÉDUCTION*}*]* de la grandeur de commande (I_{SOLL}) *[I*_{*THÉORIQUE*}*]*, être amené en position de réduction de pression (III.) dans laquelle la liaison entre la chambre de dépression (23) et la chambre de pression (24) est ouverte et la liaison de la chambre de pression (24) vers l'atmosphère est bloquée de sorte que la différence de pression agissant à la paroi mobile (22) diminue via un processus de compensation de pression.

4. Servofrein à commande électronique selon la revendication 3, **caractérisé en ce que**
- la grandeur de commande (I_{SOLL}) *[I*_{*THÉORIQUE*}*]* adopte la première valeur de courant (I_{AUFBAU}) *[I*_{*MISE EN*} _{*PRESSION*}*]* lorsque la grandeur de référence (p_{SOLL}) *[p*_{*THÉORIQUE*}*]* est supérieure à la grandeur de réglage (p_{IST}) *[p*_{RÉELLE}*]*,
- la grandeur de commande (I_{SOLL}) *[I*_{*THÉORIQUE*}*]* adopte la deuxième valeur de courant (I_{HALT}) *[I*_{*MAINTIEN]*} lorsque la grandeur de référence (p_{SOLL}) *[p*_{*THÉORIQUE*}*]* est pour l'essentiel égale à la grandeur de réglage (p_{IST}) *[p*_{*RÉELLE*}*]*, et
- la grandeur de commande (I_{SOLL}) *[I*_{*THÉORIQUE*}*]* adopte la troisième valeur de courant (I_{ABBAU}) *[I*_{*RÉDUCTION*}*]* lorsque la grandeur de référence (p_{SOLL}) *[p*_{*THÉORIQUE*}*]* est inférieure à la grandeur de réglage (p_{IST}) *[p*_{*RÉELLE*}*]*.

5. Servofrein à commande électronique selon la revendication 4, **caractérisé par**
- un régulateur (R) proportionnel et/ou intégral et/ou différentiel additionnel servant à convertir la différence de réglage (x_{d}) en une grandeur de commande auxiliaire (H) pour superposer celle-ci de manière additionnelle à la grandeur de commande (I_{SOLL}) *[I*_{*THÉORIQUE*}*]*.

6. Servofrein à commande électronique selon la revendication 5, **caractérisé en ce que**
- un organe de transmission linéaire à zone morte (|X_{TZ}|) est monté en amont du régulateur (R) proportionnel et/ou intégral et/ou différentiel additionnel.
